# EUROPEAN PATENT SPECIFICATION

(11) **EP 1 436 511 B1**
(45) Date of publication and mention of the grant of the patent: **07.03.2007**
(21) Application number: 02770357.8
(22) Date of filing: 13.09.2002
(51) Int. Cl.: F15B 20/00, E21C 35/04, G01M 3/32

(54) **METHOD FOR RESTRICTING LEAKAGE OF HYDRAULIC OIL IN A ROCK DRILLING RIG**
VERFAHREN ZUR EINSCHRÄNKUNG VON LECKAGE VON HYDRAULIKÖL IN EINEM GESTEINSBOHRGERÄT
PROCEDE POUR REDUIRE LES FUITES D'HUILE HYDRAULIQUE D'UN APPAREIL DE FORAGE DE ROCHE

(30) Priority: 18.09.2001 SE 0103083
(43) Date of publication of application: 14.07.2004
(73) Proprietor: Atlas Copco Rock Drills AB, 701 91 Örebro (SE)
(72) Inventor: GRAHN, Fredrik, S-716 92 Fjugesta (SE); LINDQVIST, Thomas, S-703 76 Örebro (SE)
(74) Representative: Jansson, Margareta Karin
(86) International application number: PCT/SE2002/001643
(87) International publication number: WO 2003/025402

(56) References cited:
- DE-A1- 4 113 202
- US-A- 5 156 042
- US-A- 5 665 895
- US-A- 5 744 701

## Description

The present invention relates to a method for restricting leakage of hydraulic oil in a rock drilling rig.

When using a rock drilling rig either at positioning of a rock drilling machine for drilling or at drilling a hydraulic hose can break or another leakage may come about. This may result in large amounts of hydraulic oil coming out in nature. One has measured oil leakage of 8 m³ per year and rock drilling rig.

DE 4113202 A discloses a method for restricting leakage of hydraulic oil for hydraulic power systems, where, based on a measured pressure in the system, a leak is detected. US 5744701 A discloses a similar method, where a loss of hydraulic oil is detected by measuring the level of oil in a reservoir which is connected to the hydraulic system.

The present invention, which is defined in the subsequent claim, aims at achieving a method for restricting leakage of hydraulic oil in a rock drilling rig with consideration to different needs of hydraulic oil at different activities. Through this an efficient restriction of the leakage of hydraulic oil is achieved without disturbing the different activities of the rock drilling rig because of unmotivated interruption of the supply of hydraulic oil to the rock drilling rig.

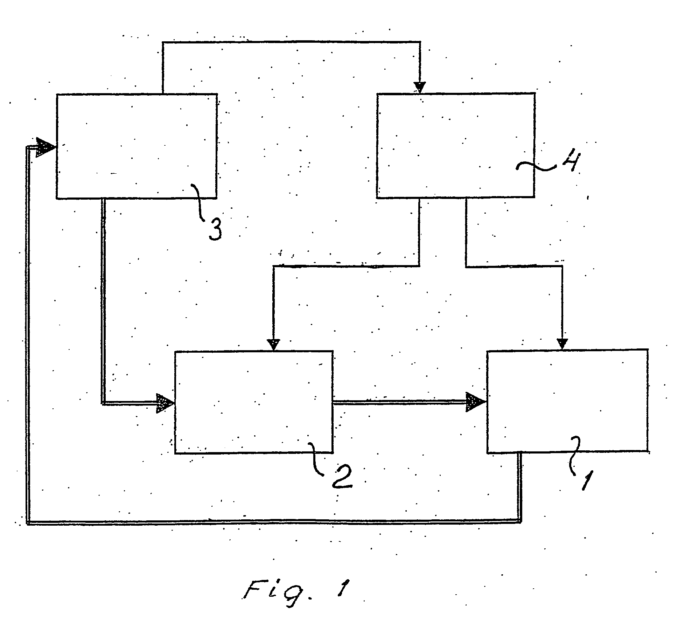

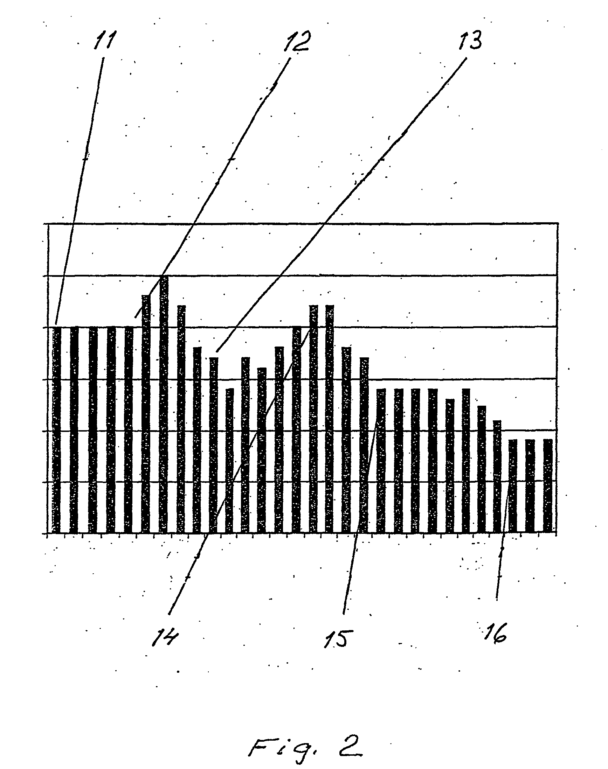

An embodiment of the invention is described below with reference to the accompanying drawings in which fig 1 schematically shows a rock drilling device comrising a rock drilling rig, hydraulic oil tank, pump and control system in which the present invention is used. Fig 2 shows an example of how the oil level in the hydraulic oil tank can vary during operation of the rock drilling rig.

The rock drilling device shown in the drawing comprises a rock drilling rig 1. The rock drilling rig comprises the usual carrier, drill booms, feeds and rock drilling machines, not shown in detail, which are supplied with hydraulic oil by a pump 2 from a tank 3. The hydrulic cylinders of the rock drilling rig 1 for alignment of the rock drilling machines, the hydraulic motors for feeding the rock drilling machine against the rock and rotation of the drill steel are like the hammer device controlled by a control system 4. The pump 2 which feeds hydraulic oil from the tank 3 to the rock drilling rig 1 is also controlled by the control system 4. The control system 4 comprises a memory where several values of the oil level in tank 3 can be stored.

In the method according to the invention two supervisory modes are used to take into consideration that the hydraulic oil flow is different for different functions of the rock drilling rig. During drilling the oil flow is relatively smaller than at positioning of the drilling machine for subsequent drilling. At positioning one has large movements in the hydraulic cylinders for positioning of drill boom and feed beam. Each time drilling or positioning is initiated the level in tank 3 is read and stored in the memory of control system 4. After initiation the level in the tank is read successively, suitably at even time intervals, and stored in the memory. A number, e.g. five, of the last stored values are used to calculate a level change velocity. The calculation can for instance be made with the method of least squares. If the level in tank 3 during drilling falls below the level at initiation with a first predetermined value, e.g. 5 liter, the supply of hydraulic oil from pump 2 to drill rig 1 is stopped through stopping of pump 2 by the control system 4. The same thing happens during poitioning if the level falls below the level at initiation with a second predetermined value, e.g. 10 liter. The pump 2 is also stopped if the level change velocity during drilling exceeds a third predetermined value, e.g. 3 liter/min. The same occurs if the level change velocity during positioning exceeds a fourth predetermined value, e.g. 10 liter/min.

In fig 2 is shown an example of how the level in tank 3 can vary during different phases of the working of the drill rig. There are two modes of operation, positioning and not positioning. The not positioning mode is used during drilling. At 11 the drill rig is activated in the not positioning mode, oil level 100. At 12 the jacks of the drill rig are drawn in in positioning mode, level 100. At 13 the feed beams are positioned in positioning mode, level 97. At 14 the jacks are pushed out in positioning mode, level 102. At initiation of the drilling at 15 in the not positioning mode the level in the tank is 94. Leakage is detected at 16 in not positioning mode when the level has sunk to 89, i.e. 5 liter below the level when the drilling was initiated. Supply of hydraulic oil is stopped.

## Claims

1. Method for restricting leakage of hydraulic oil in a rock drilling rig (1), **characterized in that** the oil level in a tank (3) is read and stored in a memory each time drilling or positioning is initiated, that the level in the tank (3) is read and stored in the memory successively between two after each other following initiations, that a number of the successively stored values are used for calculating a level change velocity, that supply of hydraulic oil from a pump (2) to the rock drilling rig (1) is stopped if during drilling the level in the tank (3) falls below the level at the initiation with a first predetermined value, or if during positioning the level in the tank (3) falls below the level at initiation with a second predetermined value, or if during drilling the level change velocity exceeds a third predetermined value, or if during positioning the level change velocity exceeds a fourth predetermined value.

## Patentansprüche

1. Verfahren für das Einschränken von Hydraulikölverlusten in einer Gesteinsbohranlage (1), **dadurch gekennzeichnet, dass** der Ölstand in einem Behälter (3) jedesmal, wenn Bohren oder Positionieren initiiert wird, ausgelesen und in einem Speicher gespeichert wird, dass der Stand in dem Behälter (3) aufeinanderfolgend zwischen zwei aufeinanderfolgenden Initiierungen, ausgelesen und in dem Speicher gespeichert wird, dass eine Anzahl von aufeinanderfolgenden gespeicherten Werten für die Berechnung einer Standänderungsgeschwindigkeit verwendet wird, dass die Zufuhr von Hydrauliköl von einer Pumpe (2) zu der Gesteinsbohranlage (1) gestoppt wird, wenn während des Bohrens der Stand in dem Behälter (3) unter den Stand bei der Initiierung mit einem ersten vorherbestimmten Wert fällt, oder wenn während der Positionierung der Stand in dem Behälter (3) unter den Stand bei der Initiierung mit einem zweiten vorherbestimmten Wert fällt, oder wenn während des Bohrens die Standänderungsgeschwindigkeit einen dritten vorherbestimmten Wert überschreitet, oder wenn während der Positionierung die Standänderungsgeschwindigkeit einen vierten vorherbestimmten Wert überschreitet.

## Revendications

1. Méthode pour réduire les fuites d'huile hydraulique dans un appareil de forage de roche (1), **caractérisé en ce que** le niveau d'huile dans un réservoir (3) est lu et stocké dans une mémoire chaque fois que le forage ou le positionnement est mis en route, **en ce que** le niveau du réservoir (3) est lu et stocké dans la mémoire successivement entre deux mises en route consécutives, **en ce qu'**un nombre de valeurs stockées successivement est utilisé pour calculer une vitesse de changement de niveau, **en ce que** l'alimentation de l'huile hydraulique à partir d'une pompe (2) vers l'appareil de forage de roche (1) est stoppé lorsque, pendant le forage, le niveau du réservoir (3) tombe au-dessous du niveau de mise en route avec une première valeur prédéterminée, ou lorsque, pendant le positionnement, le niveau du réservoir (3) tombe au-dessous du niveau de mise en route avec une seconde valeur prédéterminée, ou lorsque, pendant le positionnement, la vitesse de changement de niveau dépasse une quatrième valeur prédéterminée.
